(19) Europäisches Patentamt
European Patent Office
Office européen des brevets

(11) **EP 2 460 140 B1**

(12) **EUROPEAN PATENT SPECIFICATION**

(45) Date of publication and mention
of the grant of the patent:
**11.09.2013 Bulletin 2013/37**

(21) Application number: **10745009.0**

(22) Date of filing: **27.07.2010**

(51) Int Cl.:
***G06T 3/40*** (2006.01)

(86) International application number:
**PCT/IB2010/053396**

(87) International publication number:
**WO 2011/013062 (03.02.2011 Gazette 2011/05)**

(54) **DISTRIBUTED IMAGE RETARGETING**

VERTEILTE BILDNEUAUSRICHTUNG

RECIBLAGE D IMAGES DISTRIBUÉES

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.07.2009 EP 09305715**

(43) Date of publication of application:
**06.06.2012 Bulletin 2012/23**

(73) Proprietor: **TP Vision Holding B.V.
5656 AE Eindhoven (NL)**

(72) Inventor: **DE HAAN, Gerard
NL-5656 AE Eindhoven (NL)**

(74) Representative: **Nederlandsch Octrooibureau
P.O. Box 29720
2502 LS The Hague (NL)**

(56) References cited:
**WO-A2-2007/141693**

- **ZHANG Y-F ET AL: "Shrinkability maps for
content-aware video resizing" COMPUTER
GRAPHICS FORUM, WILEY-BLACKWELL
PUBLISHING LTD, GB LNKD- DOI:10.1111/J.
1467-8659.2008.01325.X, vol. 27, no. 7, 1 October
2008 (2008-10-01), pages 1797-1804,
XP007915215 ISSN: 0167-7055 [retrieved on
2009-01-23]**
- **LIU F ET AL: "Automatic image retargeting with
fisheye-view warping" PROCEEDINGS OF THE 18
ANNUAL ACM SYMPOSIUM ON USER
INTERFACE SOFTWARE AND TECHNOLOGY :
OCTOBER 23 - 26, 2005 SEATTLE, WA; [ACM
SYMPOSIUM ON USER INTERFACE SOFTWARE
AND TECHNOLOGY], NEW YORK, NY : ACM
PRESS, US, 23 October 2005 (2005-10-23), pages
153-162, XP007915216 ISBN: 978-1-59593-023-1**
- **JUN-SEONG KIM ET AL: "Adaptive image and
video retargeting technique based on Fourier
analysis" COMPUTER VISION AND PATTERN
RECOGNITION, 2009. CVPR 2009. IEEE
CONFERENCE ON, IEEE, PISCATAWAY, NJ,
USA, 20 June 2009 (2009-06-20), pages
1730-1737, XP031607193 ISBN:
978-1-4244-3992-8**

## Description

FIELD OF THE INVENTION

The invention relates to the field of image retargeting.

BACKGROUND OF THE INVENTION

The recent developments in the field of display technologies have seen great diversity in display sizes and same content is required to be displayed in different dimensions and aspect ratio for different devices. Typically, videos recorded for the old 4:3 ratio of CRT television are now displayed on 16:9 wide screen TV.

There is thus a need of algorithm that could adapt images to displays different than originally intended for.

Basic image resizing techniques are linear scaling or cropping. However, these techniques lead to image quality degradation due to loss of details, anisotropic squish or stretch, suppression of region outside the cropping window, etc.

Hence effective adaptation of images considering the image content is needed. Such an intelligent adaptation is known in the art as "Image retargeting" or "Video retargeting" if video is considered.

For modifying "intelligently" an image, numerous methods use a saliency map which defines an information value for each pixel.

For instance, document EP 1 968 008 discloses a method for content-aware image retargeting which is known as "Seam Carving". A saliency map, also called an energy image, from a source image is generated according to an energy function, often a luminance gradient function. From the energy image, one or more seams are determined according to a minimizing function such that each seam has a minimal energy. Each seam is applied to the source image by suppressing or duplicating the seam to obtain a target image that preserves content but with a different aspect ratio.

This technique was extended to video retargeting by defining a 2D seam surface in a 3D video space-time cube. The intersection of the surface with each frame defines a seam in the sense of the document. The manifold seam surface allows the seam to change adaptively over time, maintaining temporal coherence.

Whichever the retargeting method used, the computation of a saliency map is a computer intensive operation. The better quality of the rescaling obtained by these content aware retargeting methods creates a need for better processing power usage.

In "Shrinkability maps for content-aware video resizing" (Computer Graphics Forum, Wiley-Blackwell Publishing Ltd, GB, vol 27, no. 7, 2008), Zhang et al. describes a server (in particular, a video-on-demand server) which precomputes and stores "shrinkability maps". When the server needs to resize transmitted video streams on-the-fly, a resizing is done by the server based on the stored shrinkability map.

In "Automatic image retargeting with fisheye-view warping" (Proceedings of the 18 annual ACM symposium on user interface software and technology, 2005, Seatle, WA), Liu et al. describes a method for adapting large images, such as those taken with a digital camera, for a small display, such as a cellular telephone. The method uses a non-linear fisheye-view warp that emphasizes parts of an image while shrinking others.

SUMMARY OF THE INVENTION

It would advantageous to achieve a method and apparatus which reduce the cost of computation whilst maintaining the high quality achieved by the content aware rescaling methods.

To better address one or more of these concerns, in a first aspect of the invention, a method for retargeting an image according to claim 1 is provided.

By computing the saliency map at the transmitter level, this computer intensive operation may be mutualised between many receivers. Furthermore, a unique saliency map is usable whatever the final aspect ratio is. Therefore, the aspect ratio of each receiver does not need to be the same.

The method has also the advantage to transfer the computation on the transmitter which is generally a high-end professional equipment. At the opposite, the receiver is generally a general purpose public equipment such as a mobile phone or a TV set for which the manufacturing cost must be kept as low as possible.

The computation of the saliency map may be also done well in advance and the saliency map is stored into the transmitter until a transmission is requested to smooth over time the computation needs.

The saliency map comprises two ID saliency curves for horizontal and vertical scaling respectively.

This transformation of the saliency map reduces significantly the quantity of data to transmit through the communication network.

In a second aspect of the invention, a system for retargeting an image is provided according to claim 3.

In a third aspect of the invention, a transmitter according to claim 4 is provided.

In a fourth aspect of the invention, a receiver according to claim 5 is provided.

Depending on the type of image, a particular embodiment may be preferred as easier to adapt or as giving a better result. Aspects of these particular embodiments may be combined or modified as appropriate or desired, however.

BRIEF DESCRIPTION OF THE DRAWINGS

These and other aspects of the invention will be apparent from and elucidated with reference to the embodiment described hereafter where:

Fig. 1 is a schematic view of a system according to an embodiment of the invention;
Fig. 2 is a flowchart of a retargeting method according to a first embodiment of the invention;
Fig. 3 is a flowchart of a retargeting method according to a second embodiment of the invention;
Fig. 4 shows three different local magnification curves;
Fig. 5 shows an image divided into eight vertical sections and four horizontal sections;
Fig. 6 illustrates the usage of a nonlinear position transformation curve;
Fig. 7 shows a scaled image obtained by the nonlinear position transformation curve of Figure 6;
Figs. 8-11 show different magnification curves obtained by using the method in accordance with an embodiment of the invention;
Fig. 12 is a flow chart illustrating a first variant of the second embodiment for correcting aspect ratio in accordance with the invention;
Fig. 13 is a flow chart illustrating a second variant of the second embodiment for correcting aspect ratio in accordance with the present invention; and
Fig. 14 is another flow chart illustrating the variant of Fig. 13.

DETAILED DESCRIPTION OF THE PREFERRED EMBODIMENTS

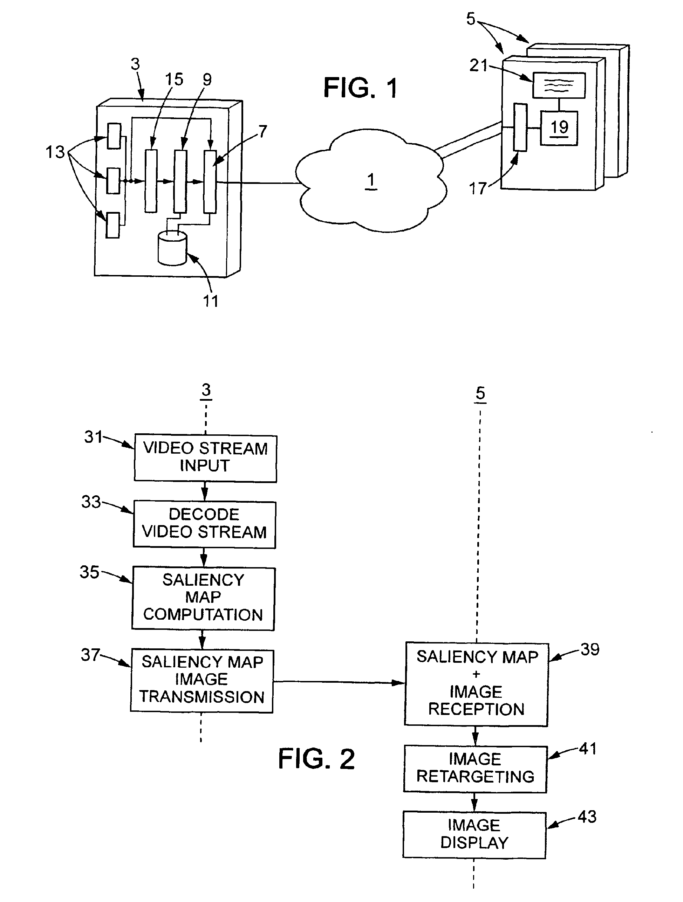

In reference to Figure 1, a communication network 1, such as Internet, connects a transmitter 3 and at least one receiver 5.

The transmitter 3 comprises a network interface 7 to connect the transmitter 3 to the communication network 1 and to transmit data to the receivers 5.

The transmitter 3 comprises also a calculator 9 and a storage area 11 and a variety of input sources 13 transporting video in a compressed format, such as MPEG-2, MPEG-4 or other formats. A decoder 15 generates from the received video raw image data IMD-1, a stream of pictures, one picture per frame to be used by the calculator 9.

The receivers 5 comprise a receptor 17 which may be a network interface similar to the network interface 7 of the transmitter 3. The receptor 17 connects the receiver 5 to the communication network 1 to receive the data transmitted by the transmitter 3.

The receivers 5 comprise also an image modifier 19 to resize a received image to a new aspect ratio adapted to the display 21.

Figure 2 illustrates the relationship between the transmitter 3 and at least one receiver 5 in the form of a flowchart where each rectangle in a column refers to a step executed in the corresponding apparatus.

At step 31, the transmitter 3 receives a video stream through one of its input sources 13. The video stream is decoded, step 33, to a stream of raw images sent to the calculator 9.

The calculator 9 computes, step 35, the saliency map of the images by using some energy function. For instance, the calculator may use a saliency map computed according to EP 1 968 008.

Each image with its saliency map is transmitted, step 37, to the receiver 5. To optimize the throughput rate of the transmission, the image and its saliency map may be compressed by using well-known algorithms. For instance, and to avoid a compression step, the transmitted image may be the compressed image received by the input sources 13. Therefore, the decoded image is used only to compute the saliency map.

The receiver 5 receives, step 39, the image and its saliency map and, if necessary, uncompresses them. The image modifier 19 retargets, step 41, the image to the desired aspect ratio by using the transmitted saliency map. The retargeting method used by the image modifier is chosen to be compatible with the saliency map. For instance, if the saliency map was computed according to EP 1 968 008, the retargeting method would be a seam carving method.

The retargeted image is then displayed, step 43, onto the display 21.

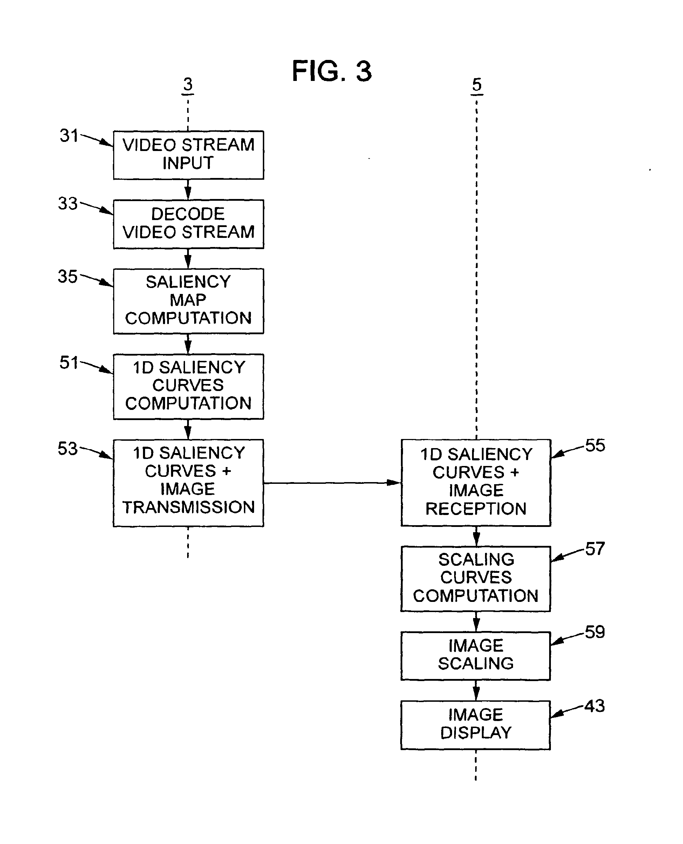

In a variant, figure 3, the saliency map computed at step 35 is transformed, step 51, into two 1D saliency curves for horizontal and vertical scaling respectively before being transmitted. This transformation reduces substantially the quantity of information to transmit at step 53.

The image and the two 1D saliency curves are received, step 55, and the 1D saliency curves are then used by the receiver to calculate, step 57, scaling curves to apply to the received image for retargeting it, step 59.

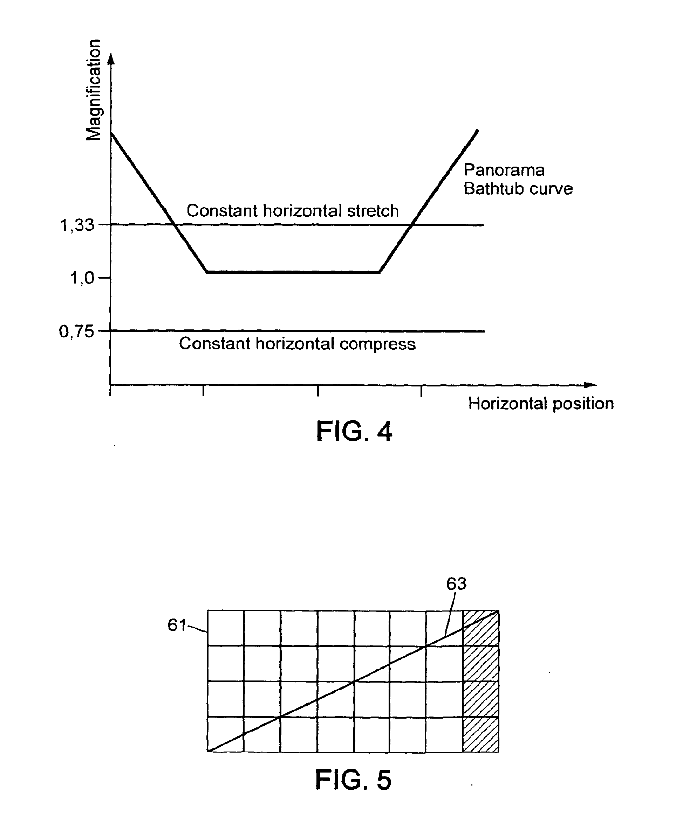

Figure 4 shows three exemplary scaling curves and more specifically magnification curves describing local magnification. These curves are: one linear scaling curve with constant magnification multiplier, one linear scaling curve with negative multiplier and the so called "bathtub" curve. The shape of the bathtub curve is such that the unity scaling is used at the centre of the image, whereas the magnification increases toward the edges of the image. Unity scaling at the centre of the image means that the objects at the centre of the image remain undistorted. Usually magnification is between 0.5 and 2.0

Figures 5, 6 and 7 illustrate nonlinear image scaling by use of a nonlinear scaling curve and more specifically position transformation (or mapping) curve. The position transformation curve results as the integral of the magnification curve. Figure 5 shows an image 61 divided into eight vertical sections with equal width and four horizontal sections with equal width. There is also shown a line 63 from one corner of the image to the opposite corner.

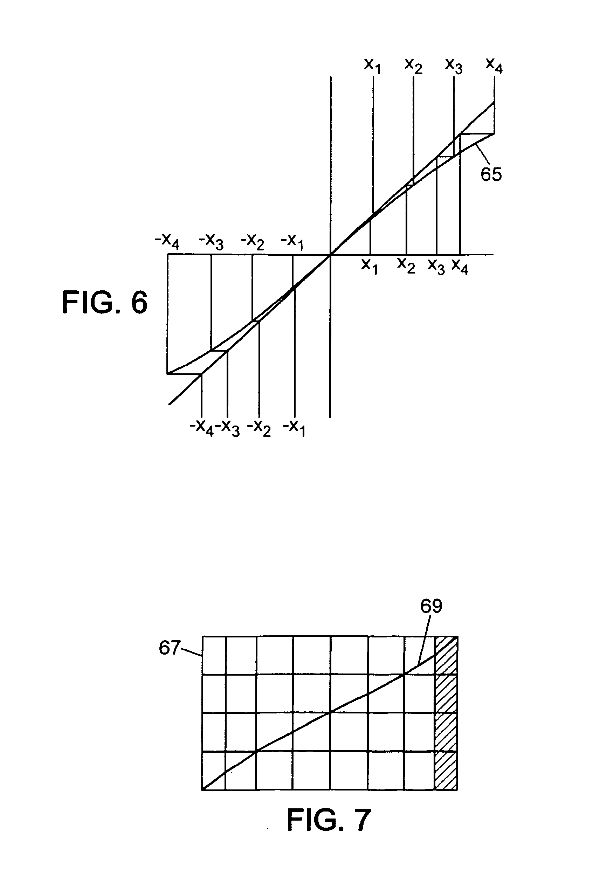

To arrive at a nonlinearly scaled image 67 as shown in Figure 7, a nonlinear position transformation curve 65 is used as shown in Figure 6. Figure 6 clearly shows an image scaling curve, i.e. position transformation curve, which results as the integral of the magnification curve. A horizontal/vertical magnification curve has to be integrated over the horizontal/vertical positions to result in a horizontal/vertical position transformation curve. In the figure it can further be seen that near the edges of the image, the vertical sections become narrower, whereas close to the centre, the horizontal sections remain unchanged. By using this kind of curve, it is assumed that the most important information of the image is located near the centre of the image. In Figure 7, the straight line 63 of a slant angle is displayed as a curve 69 due to the nonlinear scaling in the horizontal direction.

However, it is to be noted that the most relevant information is not always located near the centre of the image. For this purpose different scaling curves can be advantageously used.

To determine the scaling curves to use, information about the local saliency, i.e. the saliency of each pixel, is accumulated in one direction (horizontal or vertical) as will be explained later in more detail. The accumulated local saliency is used to calculate costs for different scaling curves. In this example, a set of initial horizontal and/or vertical scaling curves is defined that include the standard curve, i.e. the "bathtub" curve, but also some curves that might be suitable in cases where the standard curve fails. This happens mainly when most important object(s) are near the side panels of the screen. The number of stored initial scaling curves is at least 2, but smaller than the number of pixels in the image. In most applications the usage of 3-10 initial scaling curves suffices.

Given the salient features or local saliency of the current image, a "cost" for each of these initial curves can be calculated. The cost of a scaling curve depends on the position of essential objects such as faces, moving objects, etc., in the image, such that the cost increases the more the local scaling factor differs from unity scaling (scaling factor 1) particularly at the position of these essential objects. In other words, a high number of salient features in locations where the scaling factor differs from 1 leads to a high cost value. For the calculation of the cost values, the salient features in locations where the scaling factor is 1 can be neglected.

The scaling curve, i.e. the position transformation curve, to be used in the actual image rescaling is calculated as a weighted average of the individual curves where the weights are inversely related to the aforementioned cost. This means that the weights are decreasing with increasing cost of a predefined scaling curve. All candidate curves (both horizontal and vertical scaling curves) individually cause the desired aspect ratio change. In this case when the sum of the weights equals 1 the resulting curves will also lead to the desired aspect ratio change. In case the input video sequence has a good temporal stability (no scene change), the weights will only change gradually causing also the output retargeted video to be temporally stable. In the event of low temporal stability of the input video (scene change), the output can react immediately to the updated cost without remaining effects from the previous scene. Consequently, the so much appreciated temporal stability of the proposed rescaling method does not prohibit rapid adaptation to the new shot. Moreover, by selecting the initial curves more or less ambitiously (i.e. the curves differ from the standard curve) it can be guaranteed that the artifacts of the aspect ratio correction are modest.

Tables 1-4 illustrate concrete examples for calculating the correct magnification curve to be used in the image scaling. In the tables each column represents a specific horizontal location in the image. For simplicity the predefined scaling curves in these examples use only two different magnification values, namely values 1 and 2. These magnification values can also be referred to as local magnification values or local scaling curves in more general terms. Thus, the predefined scaling curves can be considered as consisting of several local scaling curves that can be considered as glued together. The predefined set of scaling curves contains three scaling curves in each example. The quality figure shown in the tables is inversely related to the cost values, which are calculated for each curve in the predefined set by taking into account the local saliency in the image as was explained above. For the final scaling curve, for each location $Y$ the resulting magnification in one direction, i.e. horizontal or vertical, can be calculated by using the following formula:

$$\sum_{X=1}^{Number\_of\_curves} QUALITY\_FIGURE_{Curve\_X} \cdot MAGNIFICATION_{Location\_Y} \cdot$$

*Table 1 - example 1*

|  | Quality figure | MAGNIFICATION | | | | | | | | |
|---|---|---|---|---|---|---|---|---|---|---|
| Curve 1 | 1,00 | 1 | 1 | 1 | 1 | 1 | 1 | 2 | 2 | 2 |
| Curve 2 | 10,00 | 1 | 1 | 1 | 2 | 2 | 2 | 1 | 1 | 1 |
| Curve 3 | 1,00 | 2 | 2 | 2 | 1 | 1 | 1 | 1 | 1 | 1 |
|  | **Result** | **1.08** | **1.083** | **1.083** | **1.833** | **1.833** | **1.833** | **1.083** | **1.083** | **1.083** |

*Table 2 - example 2*

|  | Quality figure | MAGNIFICATION | | | | | | | | |
|---|---|---|---|---|---|---|---|---|---|---|
| Curve 1 | 10,00 | 1 | 1 | 1 | 1 | 1 | 1 | 2 | 2 | 2 |
| Curve 2 | 1,00 | 1 | 1 | 1 | 2 | 2 | 2 | 1 | 1 | 1 |
| Curve 3 | 1,00 | 2 | 2 | 2 | 1 | 1 | 1 | 1 | 1 | 1 |
|  | **Result** | **1.08** | **1.083** | **1.083** | **1.083** | **1.083** | **1.083** | **1.833** | **1.833** | **1.833** |

*Table 3 - example 3*

|  | Quality figure | MAGNIFICATION | | | | | | | | |
|---|---|---|---|---|---|---|---|---|---|---|
| Curve 1 | 10,00 | 1 | 1 | 1 | 1 | 1 | 1 | 2 | 2 | 2 |
| Curve 2 | 10,00 | 1 | 1 | 1 | 2 | 2 | 2 | 1 | 1 | 1 |
| Curve 3 | 1,00 | 2 | 2 | 2 | 1 | 1 | 1 | 1 | 1 | 1 |
|  | **Result** | **1.05** | **1.047** | **1.047** | **1.476** | **1.476** | **1.476** | **1.476** | **1.476** | **1.476** |

*Table 4 - example 4*

|  | Quality figure | MAGNIFICATION | | | | | | | | |
|---|---|---|---|---|---|---|---|---|---|---|
| Curve 1 | 10,00 | 1 | 1 | 1 | 1 | 1 | 1 | 2 | 2 | 2 |
| Curve 2 | 1,00 | 1 | 1 | 1 | 2 | 2 | 2 | 1 | 1 | 1 |
| Curve 3 | 10,00 | 2 | 2 | 2 | 1 | 1 | 1 | 1 | 1 | 1 |
|  | **Result** | **1.48** | **1.476** | **1.476** | **1.047** | **1.047** | **1.047** | **1.476** | **1.476** | **1.476** |

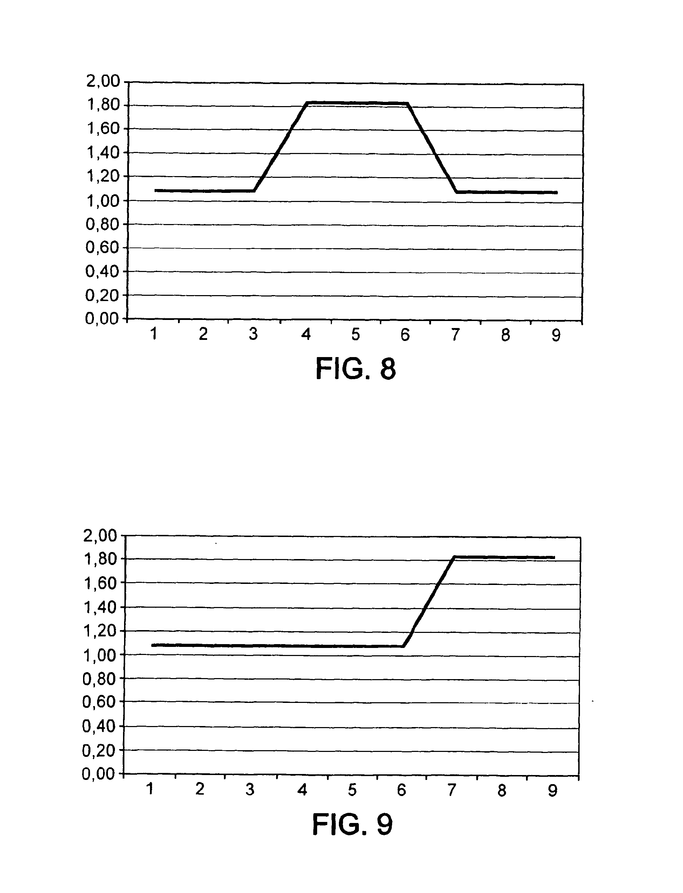

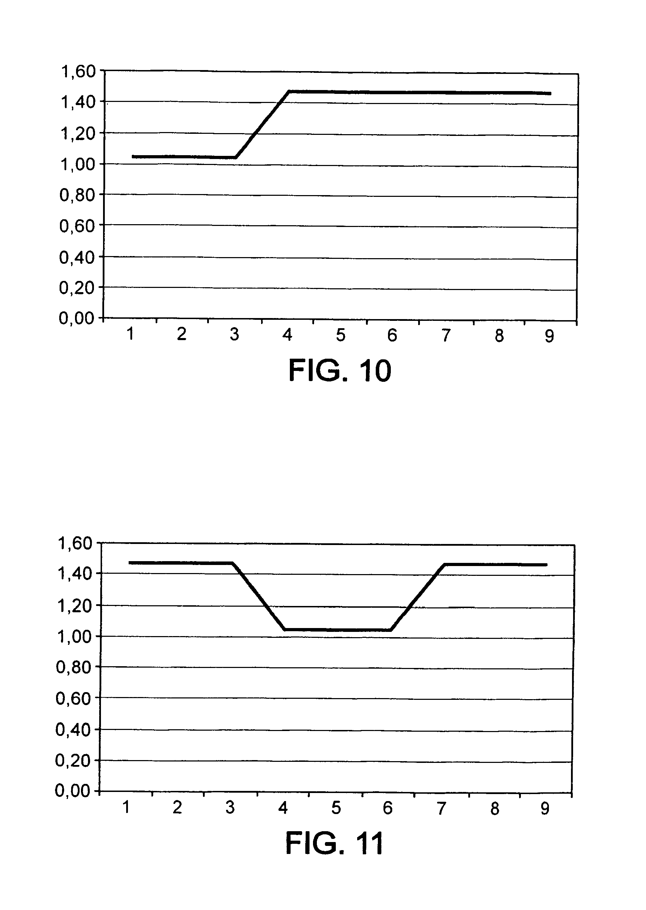

The resulting final magnification curves for Tables 1, 2, 3 and 4 are shown in figures 8, 9, 10 and 11, respectively. The curves shown in these figures exhibit abrupt changes in magnification and for this reason in order to avoid unacceptable distortions, these curves may have to be smoothed e.g. by filtering or starting from smooth curves.

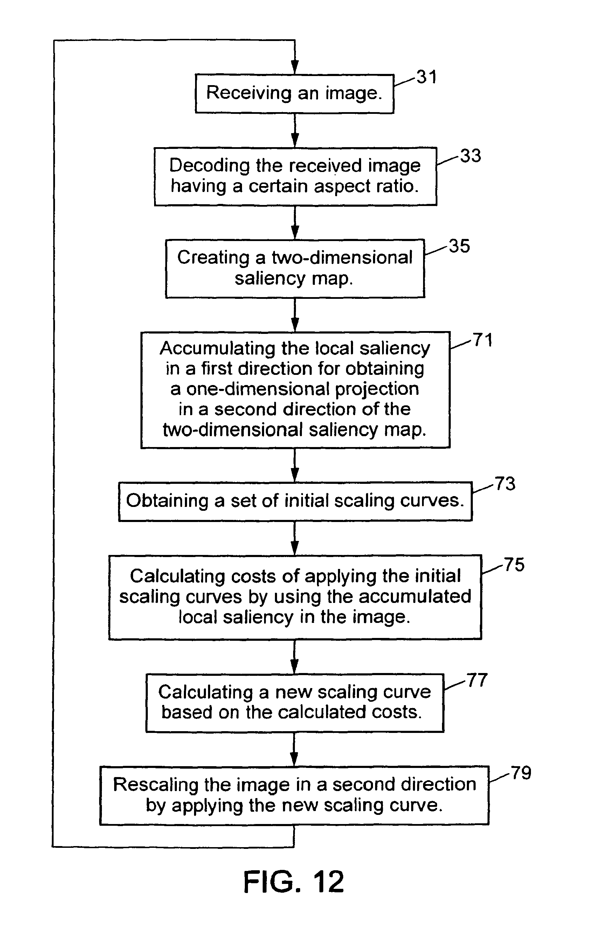

To transform the saliency map into two 1D saliency curves, Figure 12, the local saliency, i.e. the saliency of each pixel, is accumulated, step 71, in a first direction, such as vertical direction, for obtaining a one-dimensional projection in a second direction (horizontal in this example) of the two-dimensional saliency map. The projection into one direction also covers the situation where the projection takes place over columns (or rows) that are wider than a single pixel line. In other words, the projection projects the local saliency of individual pixels in the received image, or a combination of local saliencies over a group of pixels orthogonal to the accumulation direction. The combination of local saliencies can for instance allow using a median or weighted average.

A set of initial scaling curves is obtained, step 73. Costs are calculated, step 75, for the different initial curves as explained above by taking into account the local saliency in the image. And a new scaling curve is calculated, step 77, based on the calculated costs. Finally, the image is rescaled, step 79, in a second direction (horizontal direction in this example) by applying the new scaling curve. The image is now ready to be displayed to the user. The second direction is substantially orthogonal to the first direction. It is to be noted that in the example above scaling was applied in just one direction, but is equally possibly to apply scaling in both horizontal and vertical directions.

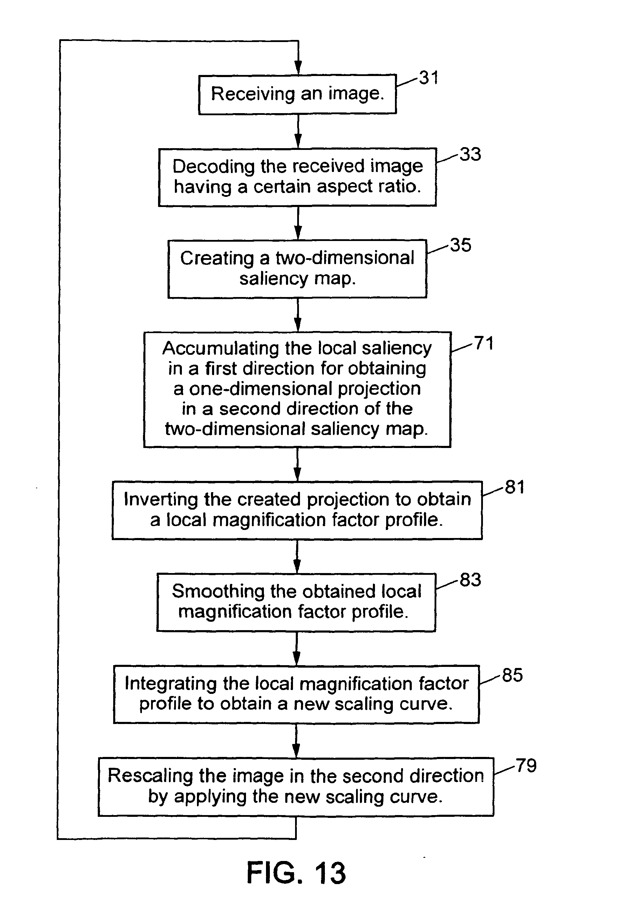

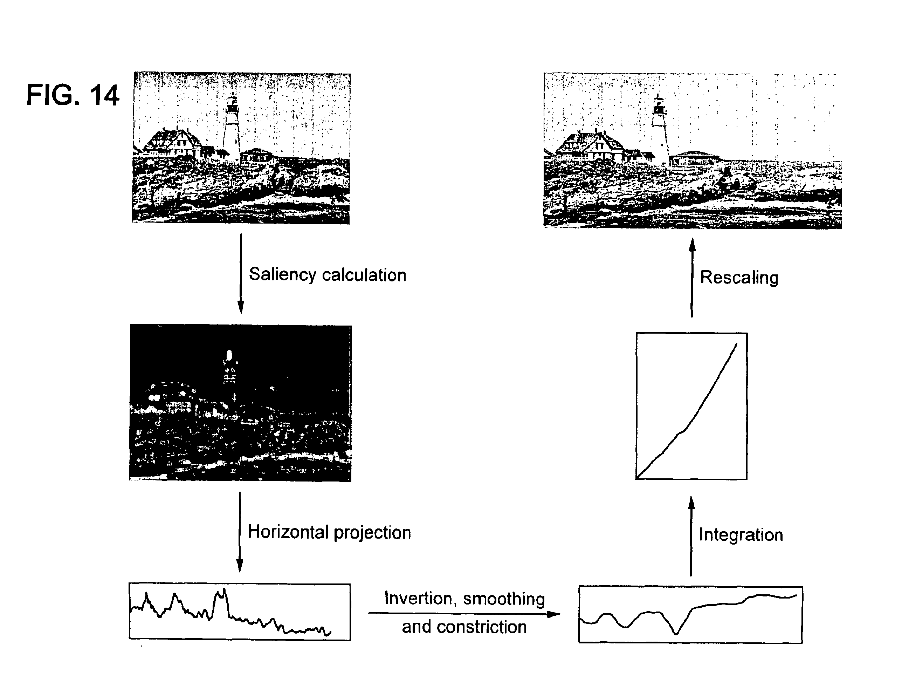

In another embodiment of this variant, Figure 13, the one-dimensional projection in the second direction is obtained, step 71. In this projection, peaks indicate the location of the salient features. Next the created projection is inverted, step 81, to obtain a local magnification factor profile. The inversion is done since for salient features a magnification factor close to one (i.e. no extra magnification) is desirable. The local magnification profile is also advantageously smoothed; step 83. And the local magnification profile is then used as scaling curve, step 85-89, for retargeting the image. An example of the method is shown at Figure 14.

The local magnification profile may be computed at the transmitter level as it is independent of the final aspect ratio. In that case, it has the same role as the 1D saliency curve. Consequently, the term "transmitted saliency map" needs to be understood, in this document, as comprising all data conveying saliency information to the receiver, independently of the final aspect ratio to be applied to the image.

The method may be implemented by a computer program product that is able to implement any of the method steps as described above when loaded and run on computer means of an image resizing apparatus. The computer program may be stored/distributed on a suitable medium supplied together with or as a part of other hardware, but may also be distributed in other forms, such as via the Internet or other wired or wireless telecommunication systems.

An integrated circuit may be arranged to perform any of the method steps in accordance with the disclosed embodiments.

While the invention has been illustrated and described in details in the drawings and foregoing description, such illustration and description are to be considered illustrative or exemplary and not restrictive; the invention is not limited to the disclosed embodiment.

For instance, the receiver 5 may be a part of a TV set or be integrated into a set top box connected to a TV set through a HDMI interface, for instance. But the receiver may also be a part of a mobile terminal able to receive and display video streams.

Other variations to the disclosed embodiments can be understood and effected by those skilled on the art in practicing the claimed invention, from a study of the drawings, the disclosure and the appended claims. In the claims, the word "comprising" does not exclude other elements and the indefinite article "a" or "an" does not exclude a plurality.

**Claims**

1. Method for retargeting an image in a system comprising a transmitter connected to at least one receiver through a communication network, said method comprising:

   - computing (35) by said transmitter a saliency map of said image;
   - transforming (51) said saliency map into two 1D saliency curves for horizontal and vertical scaling respectively;
   - transmitting (53) said image and said two 1D saliency curves from said transmitter to said at least one receiver through said communication network;
   - calculating (57) by said at least one receiver scaling curves using said two 1D saliency curves;
   - retargeting (59) by said at least one receiver said transmitted image by applying said scaling curves.

2. Method according to claim 1, wherein the system comprises a plurality of receivers.

3. System for retargeting an image comprising:

   - a transmitter (3) comprising

      - a saliency map calculator (9) for computing a saliency map of said image, and transforming said saliency map into two 1D saliency curves for horizontal and vertical scaling respectively; and
      - a network interface (7) for transmitting the image and the two 1D saliency curves onto a communication network;

   - a receiver (5) comprising:

      - a receptor (17) connected to said communication network for receiving the transmitted image and the transmitted two 1D saliency curves;
      - calculation means for calculating scaling curves using said two 1D saliency curves;
      - an image modifier (19) for retargeting said transmitted image by applying said scaling curves.

**4.** A transmitter (3) in a system for retargeting an image comprising:

- a saliency map calculator (9) for computing a saliency map of said image, and transforming said saliency map into two 1D saliency curves for horizontal and vertical scaling respectively, said saliency curves being usable for calculating scaling curves therefrom; and
- a network interface (7) for transmitting the image and the two 1D saliency curves onto a communication network

**5.** A receiver (5) in a system for retargeting an image comprising:

- a receptor (17) connected to said communication network for receiving the image and two 1D saliency curves;
- calculation means for calculating scaling curves using said two 1D saliency curves;
- an image modifier (19) for retargeting said image by applying said scaling curves.

**Patentansprüche**

**1.** Verfahren zum Neuausrichten eines Bildes in einem System, das einen Sender aufweist, der über ein Kommunikationsnetz mit mindestens einem Empfänger verbunden ist, wobei das Verfahren die Schritte aufweist:

- Berechnen (35) einer Salienzkarte des Bildes durch den Sender;
- Umwandeln (51) der Salienzkarte in zwei 1D-Salienzkurven für eine horizontale bzw. eine vertikale Skalierung;
- Übertragen (53) des Bildes und der beiden 1D-Salienzkurven vom Sender über das Kommunikationsnetz zu dem mindestens einen Empfänger;
- Berechnen (57) von Skalierungskurven durch den mindestens einen Empfänger unter Verwendung der beiden 1D-Salienzkurven; und
- Neuausrichten (59) des übertragenen Bildes durch den mindestens einen Empfänger durch Anwenden der Skalierungskurven.

**2.** Verfahren nach Anspruch 1, wobei das System mehrere Empfänger aufweist.

**3.** System zum Neuausrichten eines Bildes, mit:

- einem Sender (3) mit:

    - einer Salienzkartenberechnungseinrichtung (9) zum Berechnen einer Salienzkarte des Bildes und Umwandeln der Salienzkarte in zwei 1D-Salienzkurven für eine horizontale bzw. eine vertikale Skalierung; und
    - einer Netzschnittstelle (7) zum Übertragen des Bildes und der beiden 1D-Salienzkurven auf ein Kommunikationsnetz;

- einem Empfänger (5) mit:

    - einer mit dem Kommunikationsnetz verbundenen Empfangseinrichtung (17) zum Empfangen des übertragenen Bildes und der beiden 1D-Salienzkurven;
    - einer Recheneinrichtung zum Berechnen von Skalierungskurven unter Verwendung der beiden 1D-Salienzkurven; und
    - einer Bildmodifizierungseinrichtung (19) zum Neuausrichten des übertragenen Bildes durch Anwenden der Skalierungskurven.

**4.** Sender (3) in einem System zum Neuausrichten eines Bildes, mit:

- einer Salienzkartenberechnungseinrichtung (9) zum Berechnen einer Salienzkarte des Bildes und Umwandeln der Salienzkarte in zwei 1D-Salienzkurven für eine horizontale bzw. eine vertikale Skalierung, wobei die Salienzkurven dazu geeignet sind, Skalierungskurven davon zu berechnen; und
- einer Netzschnittstelle (7) zum Übertragen des Bildes und der beiden 1D-Salienzkurven auf ein Kommunikationsnetz.

**5.** Empfänger (5) in einem System zum Neuausrichten eines Bildes, mit:

- einer mit dem Kommunikationsnetz verbundenen Empfangseinrichtung (17) zum Empfangen des Bildes und der beiden 1D-Salienzkurven;
- einer Recheneinrichtung zum Berechnen von Skalierungskurven unter Verwendung der beiden 1D-Salienzkurven; und
- einer Bildmodifizierungseinrichtung (19) zum Neuausrichten des Bildes durch Anwenden der Skalierungskurven.

**Revendications**

1. Procédé permettant de recibler une image dans un système comprenant un transmetteur relié à au moins un récepteur par un réseau de communications, ce procédé comprenant les étapes consistant à :

   - faire calculer (35) par le transmetteur une carte de saillance de cette image,
   - transformer (51) cette carte de saillance en deux courbes de saillance 1D respectivement pour permettre un cadrage horizontal et vertical,
   - transmettre (53) cette image et ces deux courbes de saillance 1D du transmetteur au(x) récepteur(s) par le réseau de communications,
   - faire calculer (57) par le ou les récepteur(s) des courbes de cadrage en utilisant les deux courbes de saillance 1D,
   - faire recibler (59) par le ou les récepteur(s) l'image transmise en appliquant les courbes de cadrage.

2. Procédé conforme à la revendication 1, selon lequel le système comporte plusieurs récepteurs.

3. Système permettant de recibler une image comprenant :

   un transmetteur (3) comprenant :

   - un calculateur de carte de saillance (9) permettant de calculer une carte de saillance de cette image et de transformer cette carte de saillance en deux courbes de saillance 1D respectivement pour permettre un cadrage horizontal et vertical, et
   - une interface de réseau (7) permettant de transmettre l'image et les deux courbes de saillance 1D sur un réseau de communications,

   un récepteur (5) comprenant :

   - un élément de réception (17) relié au réseau de communications pour permettre de recevoir l'image transmise et les deux courbes de saillance 1D transmises,
   - des moyens de calcul permettant de calculer des courbes de cadrage en utilisant les deux courbes de saillance 1D,
   - un modificateur d'image (19) pour permettre de recibler l'image transmise en appliquant les courbes de cadrage.

4. Transmetteur (3) dans un système permettant de recibler une image comprenant :

   - un calculateur de carte de saillance (9) permettant de calculer une carte de saillance de cette image et de transformer cette carte de saillance en deux courbes de saillance 1D respectivement pour permettre un cadrage horizontal et vertical, ces courbes de saillance pouvant être utilisées pour calculer à partir de celle-ci des courbes de cadrage et,
   - une interface de réseau (7) permettant de transmette l'image et les deux courbes de saillance 1D sur un réseau de communications.

5. Récepteur (5) dans un système permettant de recibler une image comprenant :

   - un élément de réception (17) relié au réseau de communications pour permettre de recevoir l'image et deux courbes de saillance 1D,
   - des moyens de calcul permettant de calculer des courbes de cadrage en utilisant les deux courbes de saillance,
   - un modificateur d'image (19) permettant de recibler l'image en appliquant les courbes de cadrage.

## FIG. 1

## FIG. 2

| | | |
|---|---|---|
| 31 | VIDEO STREAM INPUT | |
| 33 | DECODE VIDEO STREAM | |
| 35 | SALIENCY MAP COMPUTATION | |
| 37 | SALIENCY MAP IMAGE TRANSMISSION | |

SALIENCY MAP + IMAGE RECEPTION — 39

IMAGE RETARGETING — 41

IMAGE DISPLAY — 43

# FIG. 3

<u>3</u>

31 → VIDEO STREAM INPUT

33 → DECODE VIDEO STREAM

35 → SALIENCY MAP COMPUTATION

51 → 1D SALIENCY CURVES COMPUTATION

53 → 1D SALIENCY CURVES + IMAGE TRANSMISSION

<u>5</u>

1D SALIENCY CURVES + IMAGE RECEPTION ← 55

SCALING CURVES COMPUTATION ← 57

IMAGE SCALING ← 59

IMAGE DISPLAY ← 43

FIG. 4

FIG. 5

FIG. 6

FIG. 7

FIG. 8

FIG. 9

FIG. 10

FIG. 11

Receiving an image. ⌐31

Decoding the received image
having a certain aspect ratio. ⌐33

Creating a two-dimensional
saliency map. ⌐35

Accumulating the local saliency
in a first direction for obtaining
a one-dimensional projection
in a second direction of the
two-dimensional saliency map. ⌐71

Obtaining a set of initial scaling curves. ⌐73

Calculating costs of applying the initial
scaling curves by using the accumulated
local saliency in the image. ⌐75

Calculating a new scaling curve
based on the calculated costs. ⌐77

Rescaling the image in a second direction
by applying the new scaling curve. ⌐79

# FIG. 12

EP 2 460 140 B1

Receiving an image. ⟞31

Decoding the received image having a certain aspect ratio. ⟞33

Creating a two-dimensional saliency map. ⟞35

Accumulating the local saliency in a first direction for obtaining a one-dimensional projection in a second direction of the two-dimensional saliency map. ⟞71

Inverting the created projection to obtain a local magnification factor profile. ⟞81

Smoothing the obtained local magnification factor profile. ⟞83

Integrating the local magnification factor profile to obtain a new scaling curve. ⟞85

Rescaling the image in the second direction by applying the new scaling curve. ⟞79

**FIG. 13**

16

FIG. 14

Saliency calculation

Horizontal projection

Invertion, smoothing and constriction

Integration

Rescaling

EP 2 460 140 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1968008 A

**Non-patent literature cited in the description**

- Shrinkability maps for content-aware video resizing. Computer Graphics Forum. Wiley-Blackwell Publishing Ltd, 2008, vol. 27

- **LIU.** Automatic image retargeting with fisheye-view warping. *Proceedings of the 18 annual ACM symposium on user interface software and technology,* 2005